# EUROPÄISCHE PATENTSCHRIFT

(11) **EP 1 077 146 B1**
(45) Veröffentlichungstag und Bekanntmachung des Hinweises auf die Patenterteilung: **07.05.2003**
(21) Anmeldenummer: 00116834.3
(22) Anmeldetag: 04.08.2000
(51) Int. Cl.: B60H 1/32

(54) **Steuereinrichtung für eine Kraftfahrzeugklimaanlage**
Control device for an automotive air conditioner
Dispositif de commande pour une installation de conditionnement d'air d'automobile

(30) Priorität: 17.08.1999 DE 19938927
(43) Veröffentlichungstag der Anmeldung: 21.02.2001
(73) Patentinhaber: DEERE & COMPANY, Moline, Illinois 61265-8098 (US)
(72) Erfinder: Wagner, Jürgen, 64287 Darmstadt (DE)
(74) Vertreter: Lau-Loskill, Philipp, Dipl.-Phys.

(56) Entgegenhaltungen:
- DE-A- 19 610 437
- DE-C- 19 812 171
- US-A- 3 738 118
- US-A- 3 844 684
- US-A- 5 761 918

## Beschreibung

Die Erfindung betrifft eine Steuereinrichtung für eine manuell gesteuerte Kraftfahrzeugklimaanlage, die wenigstens einen in einem Kühlkreislauf angeordneten, elektrisch durch eine Kompressorkupplung einschaltbaren Kompressor ohne eigene Umlaufschmierung enthält. Dem im Kühlkreislauf umlaufenden Kühlmittel ist ein Schmiermittel zugesetzt, welches der Schmierung des Kompressors dient. Die Steuereinrichtung enthält eine elektrische Schalteinrichtung, durch die der Kompressor der Klimaanlage wahlweise einschaltbar ist.

Eine im Fahrzeugbau übliche Klimaanlage arbeitet nach dem Grundprinzip des Kühlkreislaufs - Verdichtung, Verflüssigung, Entspannung und Verdampfung. Der Kühlkreislauf wird durch einen Kompressor aufrechterhalten. Das Kältemittel fließt als Niederdruckgas zum Kompressor, wird von diesem verdichtet und als Hochdruckgas an einen Kondensator geleitet, wo es sich verflüssigt und seine Wärme an die Außenluft abgibt. Die herauskondensierte Hochdruckflüssigkeit fließt weiter zu einem Entspannungsventil, welches den Durchfluß drosselt und den Flüssigkeitsdruck herabsetzt. Im sich anschließenden Verdampfer nimmt die Niederdruckflüssigkeit die Wärme der Innenluft der Fahrzeugkabine auf und wird wieder in den gasförmigen Zustand versetzt. Das erhitzte Kältemittel fließt als Niederdruckgas zurück zum Kompressor.

Der Kompressor wird beispielsweise durch den Verbrennungsmotor des Fahrzeugs angetrieben. Zu diesem Zweck befindet sich zwischen einem Antriebsrad des Verbrennungsmotors und dem Kompressor eine elektrisch betätigbare Kompressorkupplung, die mit einer elektrischen Schalteinrichtung in Verbindung steht und ein wahlweises Einschalten des Kompressors und damit eine Inbetriebnahme der Klimaanlage erlaubt. Es ist auch möglich den Kompressor durch einen Elektromotor anzutreiben, der seinerseits durch eine Schalteinrichtung ansteuerbar ist.

Als Klimakompressoren werden häufig Taumelscheiben-Axialkolbenkompressoren verwendet, die während des Betriebs durch Schmiermittel, insbesondere Kältemittelöl geschmiert werden müssen. Zu diesem Zweck ist das Schmiermittel dem im Kühlkreislauf umlaufenden Kälte- oder Kühlmittel zugesetzt und vermischt sich mit dem Kältemittel. Während des Betriebs der Klimaanlage wird das Schmiermittel durch das Kältemittel im Kältekreislauf transportiert und schmiert den Kompressor nach dem Zweitaktmotorprinzip. Üblicherweise wird als Kältemittel handelsübliches R134A und als Kältemittelöl PAG-Öl (Polyäthylenglykol) verwendet.

Wenn die Klimaanlage über einen längeren Zeitraum (Wochen/Monate) nicht in Betrieb genommen wird, kann es zu einer Entmischung des Kältemittels und des Schmiermittels kommen. Dies hat zur Folge, daß der Kompressor beim nächsten Anschalten der Klimaanlage zunächst solange ohne oder bei verminderter Schmierung läuft, bis wieder Schmiermittel aus dem Kühlkreislauf zum Kompressor transportiert wird. Insbesondere bei Verwendung von Kompressoren (DE-A-196 10 437) ohne eigenes Ölreservoir, bei denen die Schmiermittelversorgung auf einer Umlaufschmierung basiert, ist die Zeitspanne, bis das Kühlmittel und das Schmiermittel im Kühlkreis umgelaufen sind und sich vermischen, so daß eine ausreichende Schmierung einsetzt, relativ lang. Unter ungünstigen Umständen kann eine mangelhafte Schmierung zur Beschädigung des Kompressors führen. Es ist daher erforderlich, daß die Bedienungsperson regelmäßig eine manuell geregelte Klimaanlage in Betrieb setzt, um einer Entmischung von Kühlmittel und Schmiermittel entgegenzuwirken. Insbesondere dann, wenn verschiedene Personen das Fahrzeug benutzen kann dies jedoch leicht übersehen oder vergessen werden.

Aus der US-A-3,844,684 geht ein anderer Kompressortyp für eine Kraftfahrzeugklimaanlage hervor, der unter Zwischenschaltung einer elektromagnetisch betätigbaren Kupplung -durch den Verbrennungsmotor des Fahrzeugs antreibbar ist. In dem Kompressorgehäuse ist eine Ölpumpe und ein Ölreservoir enthalten. Die Ölpumpe fördert Schmieröl aus dem Ölreservoir zu den Schmierstellen. Bleibt der Kompressor längere Zeit außer Betrieb, so läuft das Schmieröl von den Schmierstellen ab und sammelt sich im Reservoir. Um der Gefahr einer unzureichenden Schmierung des Kompressors beim Inbetriebsetzen der Klimaanlage zu begegnen, wird vorgeschlagen, unmittelbar beim Anlassen des Fahrzeugmotors den Kompressor automatisch durch Einrücken der Kupplung in Gang zu setzen, sofern die Außentemperatur über einem vorgebbaren Wert liegt. Schon nach wenigen Umdrehungen tritt eine ausreichende Schmiermittelversorgung ein. Beim Loslassen des Zündschlüssels nach erfolgtem Start wird die Kupplung wieder geöffnet und der Kompressor vom Verbrennungsmotor getrennt. Hierdurch soll die Schmierung bei einem Betriebszustand aufgenommen werden, bei dem noch keine hohen Kräfte an den zu schmierenden Stellen auftreten. Diese kurzzeitige Inbetriebnahme des Kompressors reicht jedoch nicht aus, um bei Kompressoren ohne eigenes Ölreservoir eine Vermischung von Kühlmittel und Schmiermittel zu gewährleisten.

Auch der DE 198 12 171 liegt ein anderer Kompressortyp zugrunde. Sie beschreibt ein Verfahren zum Betrieb einer automatischen Kraftfahrzeug-Klimaanlage mit einem von umgewälztem Schmiermittel geschmierten Kompressor ohne Kupplung, dessen Mechanik auch ohne angeforderte Verdichterleistung und bei tiefen Außentemperaturen ständig mitläuft. Es handelt sich hierbei um einen extern geregelten Kompressor, dessen Leistung von außen gesteuert werden kann, um die Klimaanlagenleistung auf einen gewünschten Wert einzustellen. Der Kompressor wird mit einem Schmiermittel geschmiert, das als Zusatz zum Kältemittel im Kältemittelkreislauf umgewälzt wird. Weil sich der Kompressor beim Betrieb des Fahrzeugs laufend mitdreht, müssen seine Lager ständig geschmiert werden. Um stets eine ausreichende Schmiermittelversorgung des Kompressors zu gewährleisten, wird der Kompressor nach dem Starten mindestens für eine vorgegebene Mindestschmierdauer in schmiermittelumwälzenden Betrieb gehalten. Die der Erfindung zugrunde liegende Aufgabe wird darin gesehen, eine Steuereinrichtung für eine Kraftfahrzeugklimaanlage der eingangs genannten Art anzugeben, durch welches die vorgenannten Probleme überwunden werden. Insbesondere soll es bei Verwendung von Kompressoren ohne Schmiermittelreservoir, wenn sich also das Schmiermittel im Kühlkreis befindet, auf zuverlässige Weise vermieden werden, daß der Kompressor nach längerem Stillstand wegen unzureichender Schmierung beschädigt wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Steuereinrichtung ist für eine Kraftfahrzeugklimaanlage vorgesehen, die wenigstens einen in einem Kühlkreislauf angeordneten, elektrisch einschaltbaren Kompressor enthält und bei der dem im Kühlkreislauf umlaufenden Kühlmittel ein Schmiermittel zugesetzt ist, welches der Schmierung des Kompressors dient. Der Kompressor wird vorzugsweise durch den Verbrennungsmotor unter Zwischenschaltung einer elektrisch betätigbaren Kompressorkupplung oder durch einen Elektromotor angetrieben. Er hat vorzugsweise kein eigenes Ölreservoir und keine Ölpumpe. Es kann sich beispielsweise um einen Kompressor handeln, wie er grundsätzlich in der DE-A-196 10 437 beschrieben wurde.

Die erfindungsgemäße Steuereinrichtung enthält eine elektrische Schalteinrichtung, durch die der Kompressor wahlweise, in der Regel manuell, einschaltbar ist. Die Steuereinrichtung enthält des weiteren einen Schaltkreis, der bei Inbetriebnahme des Fahrzeugs automatisch anspricht und den Kompressor unabhängig von dem Schaltzustand der Schalteinrichtung, also unabhängig davon, ob die Klimaanlage manuell eingeschaltet wurde, zeitgesteuert für ein vorbestimmtes Einschalt-Zeitintervall einschaltet. Der Schaltkreis kann mit wenigen, kostengünstigen Bauelementen aufgebaut werden. Der angestrebte Erfolg läßt sich damit auch bei solchen manuell geregelten Klimaanlagen realisieren, die keine aufwendige elektronische Regeleinrichtung mit zugehöriger Software enthalten.

Vorzugsweise spricht der Schaltkreis automatisch bei jedem Starten des Verbrennungsmotors an, das durch den in das Zündschloß gesteckten Zündschlüssel ausgelöst wird. Der Schaltkreis überbrückt dann für einen bestimmten Zeitabschnitt die dem Einschalten der Klimaanlage dienende Schalteinrichtung, und zwar unabhängig von dem Schaltzustand der Schalteinrichtung. Dies erfolgt automatisch, ohne daß die Bedienungsperson eingreift oder hiervon Kenntnis nehmen muß. Damit wird sichergestellt, daß eine regelmäßige Durchmischung von Kältemittel und Schmiermittel erfolgt, so daß einer schleichenden Entmischung entgegengewirkt wird. Eine Entmischung von Kühlmittel und Schmiermittel im Kühlkreislauf tritt auch dann nicht auf, wenn die Klimaanlage für längere Zeit, z. B. bei kühlen oder mittleren Außentemperaturen, nicht durch die Bedienungsperson in Betrieb gesetzt wird. Als Folge hiervon wird der Kompressor immer, insbesondere in den Anlaufphasen des Verbrennungsmotors, gut geschmiert. Teure Kompressorschäden lassen sich damit durch einfache Mittel vermeiden.

Es hat sich als besonders vorteilhaft herausgestellt den Schaltkreis mit einem Verzögerungsglied, z. B. einem Zeitrelais, auszustatten, um den Kompressor erst nach Ablauf einer Verzögerungszeit nach dem Ansprechen des Schaltkreises für ein Zeitintervall einzuschalten. Durch die Verzögerung wird vermieden, daß beim Starten des Verbrennungsmotors dieser durch den Kompressor zusätzlich belastet und evtl. abgewürgt wird. Erst wenn der Motor angelaufen ist, wird der Kompressor für ein vorgebbares Zeitintervall zugeschaltet. Die Verzögerungszeit wird so bemessen, daß der Verbrennungsmotor zwar zuverlässig anläuft, sich jedoch beim Zuschalten des Kompressors noch mit relativ geringen Drehzahlen dreht. Bei langsamer Anfangsdrehzahl wird die Gefahr einer Beschädigung des Kompressors wegen mangelnder Schmierung auch für den Fall vermindert, daß eine Entmischung von Kältemittel und Schmiermittel wegen einer längeren Betriebspause des Fahrzeugs eingetreten ist. Die Verzögerungszeit liegt vorzugsweise in der Größenordnung von 10 Sekunden.

Gemäß einer bevorzugten Weiterbildung der Erfindung enthält der Schaltkreis ein das Einschalt-Zeitintervall des Kompressors bestimmendes elektrisches Zeitglied, das nach Art einer Uhr arbeitet, durch ein Startsignal in Gang gesetzt wird und für ein vorgebbares Zeitintervall elektrische Steuersignale zum Betrieb des Kompressors abgibt. Vorzugsweise läßt sich das durch das Zeitglied definierte Zeitintervall durch Programmierung oder Einstellung einer Eingangsgröße des Zeitgliedes vorgeben. Ein entsprechendes Zeitglied kann gegebenenfalls auch zur Einstellung der oben genannten Verzögerungszeit vorgesehen sein.

Um eine ausreichende Durchmischung des Kühlmittels und des Schmiermittels im Kühlkreislauf zu gewährleisten, ohne den Kompressor zu lange in Betrieb zu setzen, hat es sich als vorteilhaft erwiesen, wenn das Einschalt-Zeitintervall in der Größenordnung von 30 Sekunden bis zu mehreren Minuten liegt.

Vorzugsweise enthält die Schalteinrichtung einen üblichen Klimaanlagenschalter. Der Schaltkreis, der ein Zeitrelais enthält, liegt in einem Strompfad parallel zum Klimaanlagenschalter.

Es kann auch zweckmäßig sein, mit dem Klimaanlagenschalter einen Thermostatschalter in Reihe zu schalten. Der Thermostatschalter dient der Temperaturregelung im Wärmetauscherblock und regelt die Verdampfertemperatur. Er schaltet den Kompressor immer dann ab, wenn die durch einen Temperatursensor gemessene Verdampfertemperatur unter einem vorgebbaren Wert liegt und ein bestimmtes Kühlniveau in der Fahrzeugkabine erreicht ist. Parallel zu der Reihenschaltung aus Klimaanlagenschalter und Thermostatschalter ist zweckmäßigerweise der Schaltkreis angeordnet, der ein Zeitrelais enthält. Hierdurch wird sichergestellt, daß unabhängig davon, ob die Klimaanlage durch den Klimaanlagenschalter eingeschaltet ist, und unabhängig von dem Schaltzustand des Thermostatschalters (Kühlniveau in der Fahrerkabine) der Kompressor beim Starten des Fahrzeugs für ein kurzes Zeitintervall eingeschaltet wird, um für eine Durchmischung des Kühlmittels und des Schmiermittels zu sorgen.

Es ist auch möglich, einen Thermostatschalter in Serie mit einer Parallelschaltung aus Klimaanlagenschalter und Schaltkreis anzuordnen.

Eine weitere bevorzugte Ausgestaltung der Erfindung sieht vor, daß in Reihe mit dem Klimaanlagenschalter und gegebenenfalls mit dem Thermostatschalter ein Druckschalter angeordnet ist. Dieser Druckschalter wird durch einen Drucksensor des Kühlkreises derart beeinflußt, daß er den Strompfad unterbricht, wenn der Druck in der Hochdruckleitung des Kühlkreises einen vorgebbaren oberen Druckgrenzwert überschreitet (beispielsweise infolge einer Verstopfung des Kondensators) oder einen vorgebbaren unteren Druckgrenzwert unterschreitet (z. B. bei Leckagen oder bei sehr tiefen Temperaturen). Der Druckschalter dient als Sicherheitsdruckschalter, der in jedem Betriebszustand wirksam sein soll. Er wird daher nicht durch den Strompfad des Schaltkreises überbrückt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Darstellung einer Klimaanlage mit erfindungsgemäßer Steuereinrichtung und
- Fig. 2: ein Zeitdiagramm des Schaltzustandes der Überbrückungsschaltung.

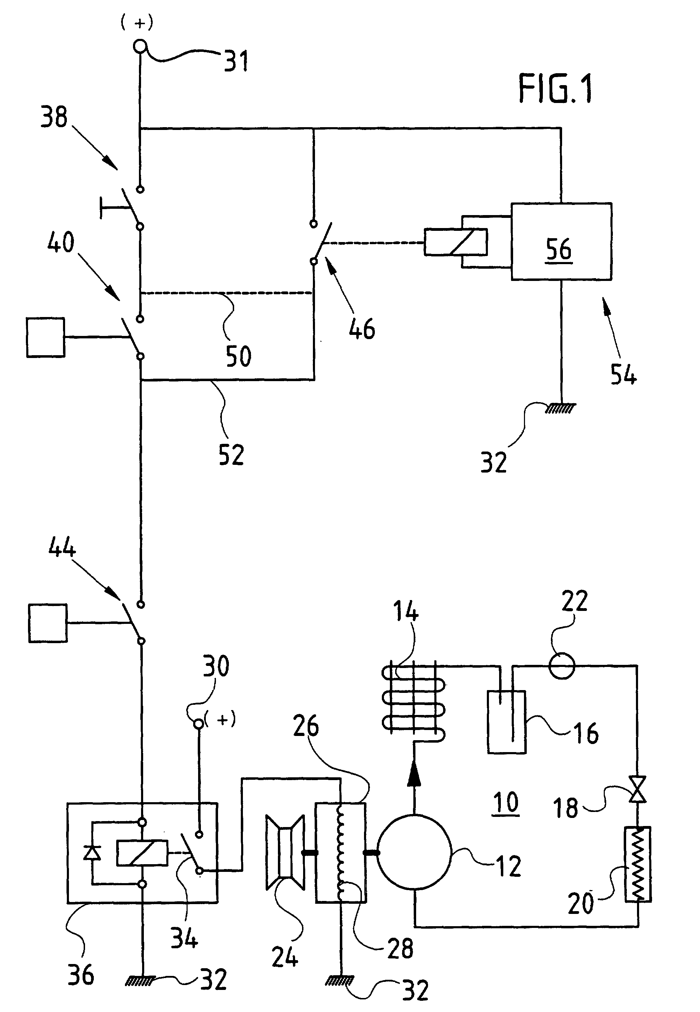

Aus Fig. 1 geht der Kühlkreislauf 10 einer Klimaanlage hervor. Dieser besteht im wesentlichen aus einem Verdichter oder Kompressor 12, einem Kondensator oder Verflüssiger 14, einem Trockner 16, einem Entspannungsventil 18 und einem Verdampfer 20. Zwischen dem Trockner 16 und dem Entspannungsventil 18 ist ein Drucksensor 22 angeordnet, der den Druck im Kühlkreislauf 10 überwacht und bei Über- oder Unterschreiten bestimmter, vorgebbarer Druckwerte Steuersignale abgibt.

Der Kompressor 12 wird durch einen nicht näher dargestellten Verbrennungsmotor des Fahrzeugs angetrieben. Zwischen der Riemenscheibe 24 des Verbrennungsmotors und dem Kompressor 12 ist eine elektrisch betätigbare Kompressorkupplung 26 angeordnet, deren elektromagnetisches Steuerelement 28 in einem Strompfad zwischen dem Pluspol 30 der Fahrzeugbatterie und der Fahrzeugmasse 32 liegt. Der Strompfad läßt sich durch die Schaltstelle 34 eines Kupplungsrelais 36 unterbrechen, so daß die Kompressorkupplung 26 die Drehmomentübertragung zwischen Verbrennungsmotor und Kompressor 12 unterbricht.

Zwischen einem Pluspol 31 und der Fahrzeugmasse 32 liegen das Kupplungsrelais 36, eine Schalteinrichtung, ein erster Thermostatschalter 40 und ein Druckschalter 44 in Serie. Bei der Schalteinrichtung handelt es sich um einen von Hand betätigbaren Klimaanlagenschalter 38. Wenn alle genannten Schalter 38, 40, 44 geschlossen sind, wird das Kupplungsrelais 36 aktiviert, die Schaltstelle 34 geschlossen, die Kompressorkupplung 26 mit Strom versorgt und eingerückt, so daß der Kompressor 12 durch den Verbrennungsmotor angetrieben wird.

Der Klimaanlagenschalter 38 befindet sich in der Fahrerkabine und kann durch die Bedienungsperson wahlweise eingeschaltet werden, um die Klimaanlage in Betrieb zu nehmen. Der Thermostatschalter 40 steht mit einem Temperatursensor, der sich in der Nähe des Verdampfers 20 befindet, in Verbindung. Wenn die Temperatur unter einen von der Bedienungsperson einstellbaren Temperaturwert absinkt, öffnet der Thermostatschalter 40 und schaltet die Klimaanlage vorübergehend solange aus, bis die Temperatur wieder angestiegen ist. Der Druckschalter 44 wird durch den Drucksensor 22 beeinflußt und öffnet immer dann, wenn der Druck im Kühlkreis unter einen vorgebbaren Wert abfällt (z. B. infolge Leckagen oder infolge sehr tiefer Außentemperaturen), oder über einen vorgebbaren Wert ansteigt (z. B. infolge Verstopfung des Kondensators).

Parallel zu der Reihenschaltung aus dem Klimaanlagenschalter 38 und dem Thermostatschalter 40 ist eine Schaltstelle 46 derart angeordnet, daß bei geschlossener Schaltstelle 46 der Klimaanlagenschalter 38 und der Thermostatschalter 40 elektrisch überbrückt werden, so daß ein Stromfluß zum Kupplungsrelais 36 auch dann möglich ist, wenn diese Schalter 38, 40 offen sind. Gemäß eine alternativen Ausgestaltung überbrückt die Schaltstelle 46 lediglich den Klimaanlagenschalter 38, was durch die gestrichelte Linie 50 angedeutet wurde. Die Linie 52 entfällt bei dieser Alternativen.

Die Schaltstelle 46 ist Teil eines Zeitrelais 54, welches eine Zeitsteuereinrichtung 56 enthält. Die Zeitsteuerung wird aktiviert, sobald der Pluspol 31 nach dem Starten des Verbrennungsmotors Strom führt. Der Pluspol 31 steht vorzugsweise mit einer Leitung der Fahrzeugelektrik in Verbindung, die beispielsweise auch den Lüfter für die Fahrzeugkabine und andere Fahrzeugaggregate versorgt.

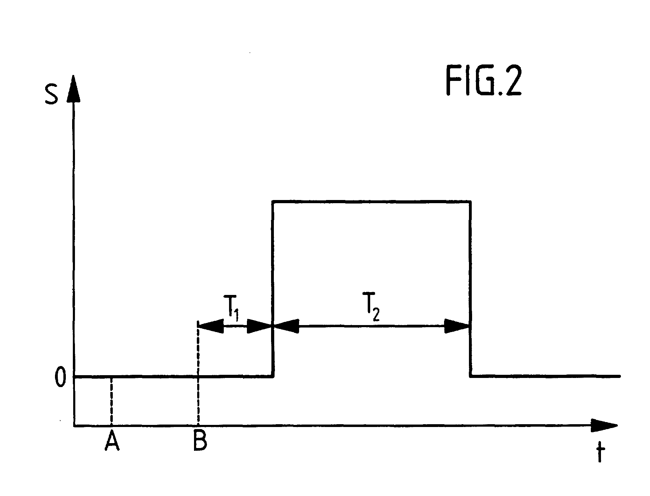

Das Verhalten der Zeitsteuerung geht aus Fig. 2 hervor, in der das Spannungsausgangssignal S der Zeitsteuerung 56 über der Zeit t dargestellt ist. Zur Zeit A wird der Verbrennungsmotor gestartet, indem die Bedienungsperson den Zündschlüssel in das Zündschloß steckt und in die Anlasserposition bis zum Anschlag "Start" dreht. Hierbei wird der Pluspol 31 von der Fahrzeugbatterie getrennt. Sobald der Verbrennungsmotor angesprungen ist, läßt die Bedienungsperson den Zündschlüssel los, so daß dieser sich in seine normale Zündstellung zurückdreht (Zeitpunkt B). Dabei wird die Verbindung zwischen dem Pluspol der Fahrzeugbatterie und dem Pluspol 31 wieder hergestellt und die Zeitsteuereinrichtung 56 aktiviert. Nach Ablauf eines ersten Zeitintervalls T₁, von beispielsweise 10 Sekunden, wird die Schaltstelle 46 geschlossen, wodurch der Klimaanlagenschalter 38 überbrückt und, sofern die Schließbedingungen für den Druckschalter 44 vorliegen, der Kompressor 12 gestartet wird. Nach Ablauf eines zweiten Zeitintervalls T₂, das 30 Sekunden bis mehrere Minuten betragen kann, öffnet die Zeitsteuereinrichtung 56 die Schaltstelle 46, so daß der Kompressor 12 wieder stillgesetzt wird, sofern der Klimaanlagenschalter 38 nicht eingeschaltet und geschlossen ist. Die beiden Zeitintervalle T₁ und T₂ lassen sich vorzugsweise an der Zeitsteuereinrichtung 56 einstellen, um eine Anpassung an die konkret verwendete Klimaanlage vornehmen zu können.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Steuereinrichtung für eine manuell geregelte Kraftfahrzeugklimaanlage, die wenigstens einen in einem Kühlkreislauf (10) angeordneten, elektrisch durch eine Kompressorkupplung (26) einschaltbaren Kompressor (12) ohne eigene Umlaufschmierung enthält und bei der dem im Kühlkreislauf (10) umlaufenden Kühlmittel ein Schmiermittel zugesetzt ist, welches der Schmierung des Kompressors (12) dient, wobei die Steuereinrichtung eine elektrische Schalteinrichtung (38) enthält, durch die der Kompressor (12) wahlweise einschaltbar ist, **dadurch gekennzeichnet, daß** die Steuereinrichtung einen Schaltkreis (54) enthält, der bei Inbetriebnahme des Fahrzeugs automatisch anspricht und den Kompressor (12) unabhängig von der Schalteinrichtung (38) für ein vorbestimmtes Einschalt-Zeitintervall (T₂) einschaltet.

2. Steuereinrichtung nach Anspruch 1, **dadurch gekennzeichnet, daß** der Schaltkreis (54) beim Starten eines das Kraftfahrzeug antreibenden Verbrennungsmotors automatisch anspricht.

3. Steuereinrichtung nach Anspruch 1 oder 2, **dadurch gekennzeichnet, daß** der Schaltkreis (54) ein Verzögerungsglied (56) enthält, um den Kompressor (12) erst einzuschalten, wenn nach dem Ansprechen des Schaltkreises (54) eine Verzögerungszeit (T₁) abgelaufen ist.

4. Steuereinrichtung nach Anspruch 3, **dadurch gekennzeichnet, daß** die Verzögerungszeit (T₁) in der Größenordnung von 10 Sekunden liegt.

5. Steuereinrichtung nach einem der Ansprüche 1 bis 4, **dadurch gekennzeichnet, daß** der Schaltkreis (54) ein das Einschalt-Zeitintervall (T₂) des Kompressors (12) bestimmendes Zeitglied (56) enthält.

6. Steuereinrichtung nach einem der Ansprüche 1 bis 5, **dadurch gekennzeichnet, daß** das Einschalt-Zeitintervall (T₂) in der Größenordnung von 30 Sekunden bis zu mehrere Minuten liegt.

7. Steuereinrichtung nach einem der Ansprüche 1 bis 6, **dadurch gekennzeichnet, daß** die Schalteinrichtung einen Klimaanlagenschalter (38) und gegebenenfalls wenigstens einen mit diesem in Reihe geschalteten Thermostatschalter (40) enthält und daß der Schaltkreis (54) ein Zeitrelais enthält, dessen Schaltkontakte (46) parallel zum Klimaanlagenschalter (38) oder zu der Reihenschaltung aus Klimaanlagenschalter (38) und Thermostatschalter (40) angeordnet sind.

8. Steuereinrichtung nach Anspruch 7, **dadurch gekennzeichnet, daß** in Reihe mit dem Klimaanlagenschalter (38) und gegebenenfalls mit dem Thermostatschalter (40) ein Druckschalter (44) angeordnet ist.

## Claims

1. A control device for a manually regulated motor vehicle air conditioning system, which includes at least one compressor (12) which is disposed in a cooling circuit (10), can be switched in electrically by a compressor clutch (26) and lacks its own circulating lubrication and in which a lubricant is added to the coolant circulating in the cooling circuit (10) and serves for lubrication of the compressor (12), wherein the control device includes an electric circuit arrangement (38) through which the compressor (12) can be selectively switched on, **characterized in that** the control device includes a circuit (54) which responds automatically to starting up the vehicle and switches the compressor (12) on for a predetermined switched on interval of time (T₂), independently of the circuit arrangement (38).

2. A control device according to claim 1, **characterized in that** the circuit (54) responds automatically on starting an internal combustion engine driving the motor vehicle.

3. A control device according to claim 1 or 2, **characterized in that** the circuit (54) includes a delay element (56) in order to switch on the compressor (12) only when a delay time (T₁) has elapsed after the response of the circuit (54).

4. A control device according to claim 3, **characterized in that** the delay time (T₁) lies in the order of magnitude of 10 seconds.

5. A control device according to any of claims 1 to 4, **characterized in that** the circuit (54) includes a timer element (56) determining the switched on interval of time (T₂) of the compressor (12).

6. A control device according to any of claims 1 to 5, **characterized in that** the switched on interval of time (T₂) lies in the order of magnitude from 30 seconds to several minutes.

7. A control device according to any of claims 1 to 6, **characterized in that** the circuit arrangement includes an air conditioning switch (38) and optionally at least one thermostat switch (40) connected in series therewith, and **in that** the circuit (54) includes a timer relay whose switch contacts (46) are connected in parallel with the air conditioning switch (38) or with the series circuit of the air conditioning switch (38) and the thermostat switch (40).

8. A control device according to claim 7, **characterized in that** the a pressure switch (44) is disposed in series with the air conditioning switch (38) and optionally the thermostat switch (40).

## Revendications

1. Dispositif de commande pour une installation de conditionnement d'air automobile à régulation manuelle, qui comprend au moins un compresseur (12), embrayable électriquement par un embrayage de compresseur (26), disposé dans un circuit de réfrigération (10), sans graissage par circulation propre, et pour lequel un lubrifiant est additionné au frigorigène circulant dans le circuit de réfrigération (10), lubrifiant qui sert au graissage du compresseur (12), le dispositif de commande contenant un dispositif de commutation électrique (38), par lequel le compresseur (12) peut être embrayé à volonté, **caractérisé en ce que** le dispositif de commande contient un circuit de commutation (54), qui réagit automatiquement lors de la mise en service du véhicule et enclenche le compresseur (12) pendant un intervalle de contact (T₂) prédéterminé indépendamment du dispositif de commutation (38).

2. Dispositif de commande selon la revendication 1, **caractérisé en ce que** le circuit de commutation (54) réagit automatiquement au démarrage d'un moteur thermique entraînant le véhicule automobile.

3. Dispositif de commande selon une des revendications 1 ou 2, **caractérisé en ce que** le circuit de commutation (54) contient un élément de retard (56), pour n'embrayer le compresseur (12) que quand une temporisation (T₁) s'est écoulée après la réaction du circuit de commutation (54).

4. Dispositif de commande selon la revendication 3, **caractérisé en ce que** la durée de la temporisation (T₁) est de l'ordre de 10 secondes.

5. Dispositif de commande selon une des revendications 1 à 4, **caractérisé en ce que** le circuit de commutation (54) contient un relais de temporisation (56) qui détermine l'intervalle de contact (T₂) du compresseur (12).

6. Dispositif de commande selon une des revendications 1 à 5, **caractérisé en ce que** l'intervalle de contact (T₂) est de l'ordre de grandeur de 30 secondes à plusieurs minutes

7. Dispositif de commande selon une des revendications 1 à 6, **caractérisé en ce que** le dispositif de commutation contient un interrupteur de climatiseur (38) et le cas échéant au moins un interrupteur thermostatique (40) monté en série avec ce dernier, et **en ce que** le circuit de commutation (54) contient un relais temporisé, dont les contacts de commutation (46) sont disposés parallèlement à l'interrupteur de climatiseur (38) ou au montage en série de l'interrupteur de climatiseur (38) et de l'interrupteur thermostatique (40).

8. Dispositif de commande selon la revendication 7, **caractérisé en ce qu'**un manocontacteur (44), est monté en série avec l'interrupteur de climatiseur (38) et le cas échéant avec l'interrupteur thermostatique (40).
